(19) Europäisches Patentamt
European Patent Office
Office européen des brevets

(11) Publication number: **0 476 366 A2**

(12) **EUROPEAN PATENT APPLICATION**

(21) Application number: **91114316.2**

(22) Date of filing: **27.08.91**

(51) Int. Cl.[5]: **C08L 71/12**, C08L 25/04, C08L 51/04

(30) Priority: **18.09.90 US 584019**

(43) Date of publication of application: **25.03.92 Bulletin 92/13**

(84) Designated Contracting States: **DE ES FR GB IT NL**

(71) Applicant: **GENERAL ELECTRIC COMPANY**
**1 River Road**
**Schenectady New York 12305(US)**

(72) Inventor: **Berzinis, Albin Peter**
**178 Hubbard Street**
**Lenox, Massachusetts 01240(US)**
Inventor: **Swanson, David John**
**2741 Newton Hook Road, P.O. Box 21**
**Stuyvesant Falls, New York(US)**
Inventor: **Chambers, Gregory Robert**
**7577 Youngs Court**
**Newburgh, Indiana 47630(US)**

(74) Representative: **Catherine, Alain**
**General Electric France Service de Propriété**
**Industrielle 18 Rue Horace Vernet**
**F-92136 Issy-Les-Moulineaux Cedex(FR)**

# (54) Polyphenylene ether compositions of improved melt strength.

(57) Polymer blend compositions exhibiting improved melt strength comprise a polyphenylene ether resin, a rubber-modified polystyrene resin and a high molecular weight polystyrene polymer having a weight average molecular weight greater than about one million. The blend compositions are particularly suitable for blow molding plastic articles.

EP 0 476 366 A2

## FIELD OF THE INVENTION

The present invention relates to polymer blend compositions comprising a polyphenylene ether resin and a rubber-modified polystyrene resin, which compositions exhibit improved melt strength. The compositions of the invention are advantageous for use in blow molding, profile extrusion and sheet extrusion processes.

## BACKGROUND OF THE INVENTION

Compositions comprising polyphenylene ether resins and rubber-modified polystyrene resin are well known in the art. Such compositions have achieved great commercial significance as engineering thermoplastics from which many important shaped articles are made. Compositions comprising polyphenylene ether resins and high impact rubber-modified polystyrenes are disclosed in the Katchman et al U. S. Patents Nos. 4,128,602, 4,128,603 and 4,128,604 and the Lee, Jr. U. S. Patent No. 3,819,761. Compositions comprising polyphenylene ether resins and rubber-modified polystyrene resins have been processed according to various methods known in the art to form molded and shaped products, sheets and films, and the like.

In the past, high melt strength compositions of polyphenylene ether resins and rubber-modified polystyrene resins have been produced by use of relatively high amounts of polystyrene resins containing high rubber contents. High melt strength compositions are advantageous in various applications including, among others, the blow-molding of large sized articles. However, high loadings of polystyrene resins containing relatively high amounts of rubber often cause a decrease in the heat distortion temperature of the compositions. A sacrifice in one or more of the physical properties of the compositions may also occur as a result of the use of large amounts of polystyrene resins containing high amounts of rubber. Thus, it has been difficult in the past to provide compositions of polyphenylene ether resins and rubber-modified polystyrene resins which exhibit high melt strength, high heat distortion temperatures and a good combination of physical properties.

## SUMMARY OF THE INVENTION

Accordingly, it is an object of the present invention to provide improved blend compositions comprising a polyphenylene ether resin and a rubber-modified polystyrene resin. It is a more specific object of the invention to provide blend compositions comprising a polyphenylene ether resin and a rubber-modified polystyrene resin, which compositions exhibit high melt strength properties. It is an additional object of the present invention to provide such compositions exhibiting both high melt strength and high heat distortion temperatures. It is a related object of the invention to provide compositions exhibiting high melt strength which are advantageous for use in blow molding, profile extrusion and sheet extrusion processes. It is a further object of the invention to provide such compositions which also exhibit a good combination of physical properties.

These and additional objects are provided by the polymer blend compositions of the present invention which comprise a polyphenylene ether resin, a rubber-modified polystyrene resin, and a high molecular weight polystyrene polymer having a weight average molecular weight greater than about one million. It has been discovered that the addition of the high molecular weight polystyrene polymer to compositions of polyphenylene ether resins and rubber-modified polystyrene resins provides the compositions with increased levels of melt strength without causing a decrease in the heat distortion temperature. Thus, the compositions according to the present invention are suitable for use in processing methods which require relatively high melt strength compositions, for example, blow molding processes, particularly of large sized articles, and profile extrusion and sheet extrusion processes.

These and additional objects and advantages will be more fully understood in view of the following detailed description.

## DETAILED DESCRIPTION

The polymer blend compositions according to the present invention are comprised of three main components, namely, a polyphenylene ether resin, a rubber-modified polystyrene resin and a high molecular weight polystyrene polymer having a weight average molecular weight greater than about one million. The compositions exhibit improved melt strength which makes the compositions particularly suitable for use in various processing methods, including blow molding, profile extrusion and sheet extrusion. Within

the content of the present invention, an improvement in melt strength is evidenced by an increase in the R* value which is defined as the ratio of the low shear rate viscosity at 1 $sec^{-1}$ of the composition to the high shear rate viscosity at 100 $sec^{-1}$, at a predetermined optimum processing temperature:

R* = (viscosity at 1 $sec^{-1}$)/(viscosity at 100 $sec^{-1}$).

Numerous experiments have shown that the optimum temperature for parison extrusion in a blow molding process is the temperature at which the shear viscosity of the material is 20,000 poise at 100 sec $^{-1}$. R* then becomes defined as R = (viscosity at 1 $sec^{-1}$/20,000 poise), where the low shear viscosity is measured at the optimum melt temperature. For more details concerning the R* value, see the Abolins et al U.S. Patent No. 4,900,786 and T. P. Dunton et al, Polymer Systems Technology, Memo Report PST 83-6.

Polyphenylene ether resins adapted for use in the polymer compositions of the present invention comprise polymers and copolymers having repeating structural units of the following general formula:

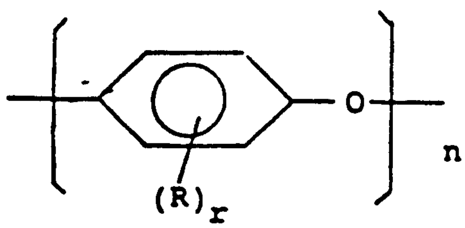

wherein each R individually represents a monovalent substituent such as hydrogen, halogen, alkyl, aryl, alkoxy and other hydrocarbon groups, r is from 1 to 4 and n represents the degree of polymerization. Preferably, n is at least 20, and more preferably, n is at least 50.

The polyphenylene ether resins suitable for use in the polymer compositions of the present invention are well known in the art and may be prepared by any of a number of processes known in the art from corresponding phenols or reactive derivatives thereof. Examples of polyphenylene ether resins and methods for their production are set forth in the Hay U. S. Patents Nos. 3,306,874 and 3,306,875, in the Stamatoff U. S. Patents Nos. 3,257,357 and 3,257,358, and in U. S. Patent No. 4,806,602, all of which are incorporated herein by reference. Throughout the Specification and Claims, the terms "polyphenylene ether resin" and "polyphenylene ether polymer" include unsubstituted polyphenylene ether polymers, substituted polyphenylene ether polymers and polyphenylene ether copolymers.

Preferred polyphenylene ether polymers adapted for use in the polymer blend compositions of the present invention include, but are not limited to, poly(2,6-dimethyl-1,4-phenylene)ether; poly(2,3,6-trimethyl-1,4-phenylene) ether; poly(2,6-diethyl-1,4-phenylene)ether; poly(2-methyl-6-ethyl-1,4-phenylene)ether; poly(2-methyl-6-propyl-1,4-phenylene)ether; poly(2,6-dipropyl-1,4-phenylene) ether; poly(2-ethyl-6-propyl-1,4-phenylene)ether; poly(2,6-dilauryl-1,4-phenylene)ether; poly(2,6-diphenyl-1,4-phenylene)ether; poly(2,6-dimethoxy-1,4-phenylene)ether; poly(2,6-diethoxy-1,4-phenyhlene)ether; poly(2-methoxy-6-ethoxy-1,4-phenylene)ether; poly(2-ethyl-6-stearyloxy-1,4-phenylene)ether; poly(2,6-dichloro-1,4-phenylene)ether; poly(2-methyl-6-phenyl-1,4-phenylene)ether; poly(2,6-dibenzyl-1,4-phenylene)ether; poly(2-ethoxy-1,4-phenylene)ether; poly(2-chloro-1,4-phenylene)ether; poly(2,6-dibromo-1,4-phenylene)ether; copolymers thereof, and the like. Particularly preferred polyphenylene ether polymers for use in the compositions of the present invention include poly(2,6-dimethyl-1,4-phenylene) ether, poly(2,3,6-trimethyl-1,4-phenylene)ether, and blends of or copolymers including units of 2,3,6-trimethyl-1,4-phenylene ether and units of 2,6-dimethyl-1,4-phenylene ether. Examples of such polymers and copolymers are set forth in U. S. Patent No. 4,806,297.

The rubber-modified polystyrene resin which is included in the polymer blend compositions according to the present invention comprises a combination of polystyrene and a rubber modifier. Specifically, the rubber-modified polystyrene comprises polymer units derived from a styrene monomer having the following formula:

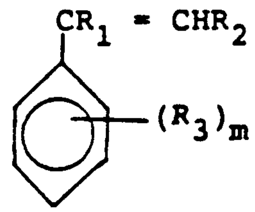

wherein $R_1$ and $R_2$ are individually selected from the group consisting of lower alkyl and alkenyl groups of from, for example, 1 to 6 carbon atoms and hydrogen, each $R_3$ is selected from the group consisting of halogen, hydrogen and lower alkyl and alkenyl groups of from, for example, 1 to 6 carbon atoms, and m is an integer of from 0 to 5. Throughout the specification and claims the term "polystyrene resin" includes unsubstituted polystyrene, substituted polystyrene and polystyrene copolymer resins. For example, suitable polystyrene resins include, but are not limited to, homopolymers of polystyrene, polychlorostyrene, polymethylstyrene and the like, and styrene-containing copolymers such as styrene-acrylonitrile copolymers, copolymers of ethyl vinyl benzene and divinyl benzene, styrene-acrylonitrile-methylstyrene terpolymers, styrene-acrylonitrile-maleic anhydride copolymers, styrene-maleic anhydride copolymers, styrene-acrylate copolymers, styrene-methacrylate copolymers, and the like. The methods for preparing these polystyrenes are well known in the art. The polystyrene resin which is included in the rubber-modified polystyrene resin generally has a weight average molecular weight, Mw, in the range of from about 25,000 to about 250,000.

The rubber modifier included in the rubber-modified polystyrene resins according to the present invention serves to improve the impact properties of the resins. Rubber modifiers are well known in the art and generally comprise both natural and synthetic rubber and elastomeric compounds. Preferred rubber modifiers include homopolymers or copolymers of one or more monomers such as butadiene, isoprene and ethylene-propylene diene monomers. Suitable rubber modifiers for use in the present invention also include, but are not limited to, hydroxy- and carboxy-terminated polybutadienes, poly-chlorobutadienes, copolymers of dienes such as butadiene and isoprene with various comonomers such as alkyl unsaturated esters, for example, methyl methacrylate, unsaturated ketones, for example, methylisopropenyl ketone, vinyl heterocyclics, for example, vinyl pyridine, and the like. Other rubber modifiers known in the art may also be used according to the present invention.

The rubber-modified polystyrene resin may be prepared by any one of various methods known in the art. For example, the rubber-modified polystyrene resin may be formed by polymerizing a styrenic monomer component in the presence of the preformed rubber modifier. Alternatively, the rubber-modified polystyrene resin may be formed by blending the preformed rubber modifier with a prepolymerized styrenic component. Additionally, the rubber modifier may be included in the polystyrene resin in varying amounts, depending on the use of the compositions as is known in the art.

The third component which is included in the polymer blend compositions of the invention comprises a high molecular weight polystyrene polymer having a weight average molecular weight, Mw, greater than about one million. The high molecular weight polystyrene polymer provides the compositions with improved melt strength. The high molecular weight polystyrene polymer may be linear or branched. Additionally, the high molecular weight polystyrene polymer preferably comprises a polystyrene homopolymer or a polystyrene copolymer formed from than less about 10 weight percent, and more preferably less than about 5 weight percent, of an additional non-styrene comonomer. The additional comonomer will generally comprise a functional monomer which provides the high molecular weight polystyrene polymer with a limited degree of branching structure. Examples of such functional monomers include, for example, acrylates and divinylbenzene, among others. One commercially available high molecular weight polystyrene polymer suitable for use in the present invention comprises Celukavit S, a product of CDF Chimie.

The amounts of polyphenylene ether resin, rubber-modified polystyrene resin and high molecular weight polystyrene polymer included in the polymer blend compositions of the invention may vary depending on the end use of the composition. It is preferred that the high molecular weight polystyrene polymer is included in an amount sufficient to improve the melt strength of the composition, particularly as indicated by an increase in the R* value, i.e., an increase in the ratio of the shear rate viscosity at 1 $sec^{-1}$ to the shear rate viscosity at 100 $sec^{-1}$, at an optimum processing temperature. In a more preferred embodiment, the high molecular weight polystyrene polymer is included in an amount of from about 1 to about 30 weight percent, based on the polyphenylene ether resin, the rubber-modified polystyrene resin and the high molecular weight polystyrene polymer. Suitable blend compositions according to the present invention may be produced from about 5 to about 95 weight percent of the polyphenylene ether resin, from

about 5 to about 95 weight percent of the rubber-modified polystyrene resin and from about 1 to about 30 weight percent of the high molecular weight polystyrene polymer. In an additionally preferred embodiment, the polymer blend compositions of the invention comprise from about 40 to about 90 weight percent of the polyphenylene ether resin, from about 10 to about 50 weight percent of the rubber-modified polystyrene resin and from about 5 to about 30 weight percent of the high molecular weight polystyrene polymer.

The polyphenylene ether resin, the rubber-modified polystyrene resin and the high molecular weight polystyrene polymer may be combined to form the blend compositions of the present invention in any conventional manner. For example, the resins and high molecular weight polystyrene polymer may be combined by dry blending in a blender, after which the resulting blend is directed to a thermoplastic extruder. A single, dual single or twin screw type extruder may be employed to form a melt extrudate of the three components. During the blending step, one or more conventional additives may be included in the blend compositions if desired. Conventional additives include, but are not limited to, stabilizers for thermal and/or color stability, antioxidants, processing aids, plasticizers, fillers, pigments and the like. Such additives may be used in conventional amounts depending on the end use of the polymer blend compositions. The polymer blend compositions of the invention may further include one or more impact modifiers which are also well known in the art.

Owing to their improved melt strength, the compositions according to the present invention are particularly suitable for use in blow molding processes to form shaped plastic articles. Blow molding is well known for use in making hollow, shaped plastic articles in a variety of commonly encountered forms, for example, doors, bottles, toys and the like. Blow molded products may be formed by either injection blow molding or extrusion blow molding. Extrusion blow molding typically comprises extruding a tube of plastic, known as a parison, through a ring dye into a mold, inflating the parison by internally introducing air or another gas until the walls of the molten tube assume the shape of the mold, allowing the shape to cool to structural rigidity, and removing the blow molded part from the mold.

The blend compositions according to the present invention having improved melt strength are also particularly suitable for use in the profile extrusion production of shaped plastic articles and in the production of plastic sheets by extrusion. Generally, in profile extrusion, the blend compositions of the invention are melt extruded and the resulting melt extrudate is formed into a shaped article. The shaped article is slowly cooled to cause controlled shrinkage, resulting in the desired product. Sheet extrusion is well known in the art and the blend compositions of the invention may be melt extruded to form sheets having a variety of thicknesses.

The compositions and improvements of the present invention are demonstrated by the following example.

## EXAMPLE

In this example, Compositions 1 and 2 were prepared according to the invention and contained a polyphenylene ether resin (PPE), a rubber-modified polystyrene resin (R-M PS) and a high molecular weight polystyrene polymer having a weight average molecular weight, Mw, greater than about one million (HMW PS). For comparison, Comparative Composition 3 was also prepared and contained a polyphenylene ether resin and a rubber-modified polystyrene resin, but did not include the high molecular weight polystyrene polymer included in the compositions of the present invention. The polyphenylene ether resin included in each of Compositions 1-3 had an intrinsic viscosity of 0.46 and the rubber-modified polystyrene resin included in each composition contained a relatively high rubber content. The high molecular weight polystyrene polymer employed in Compositions 1 and 2 according to the present invention comprised Celukavit S. The parts by weight of each of the components employed in Compositions 1-3 are set forth in the Table. Each of Compositions 1-3 also contained 1.5 parts by weight polyethylene, 0.5 parts by weight TDP (tridecyl phosphite), 0.15 parts by weight zinc sulfide, 0.15 parts zinc oxide and 2.0 parts by weight KD 1101. The compositions were prepared by melt extrusion.

The compositions were also subjected to measurement of various properties. Specifically, the compositions were subjected to measurement of the R* value as described in the specification at a processing temperature of 250 °C and to measurement of the heat distortion temperature according to ASTM-D648. Additionally, the tensile and flexural properties of the compositions were measured according to ASTM D-638 and the Izod and Dynatup impact strengths of the compositions were measured according to ASTM-D256 and ASTM D-3763-85, respectively. The results of these measurements are set forth in the Table.

TABLE

| Composition | 1 | 2 | 3 |
|---|---|---|---|
| PPE, pbw | 50 | 50 | 50 |
| R-M PS, pbw | 40 | 30 | 50 |
| HMW PS, pbw | 10 | 20 | 0 |
| $R^*$, 250°C | 15.3 | 17.2 | 11.7 |
| HDT, 264 psi °F | 246 | 246 | 247 |
| Tensile Strength, psi | 6710 | 7710 | 5780 |
| Flexural Modulus, psi | 300,000 | 335,000 | 265,000 |
| Izod, 73°F, ft-lb/in | 5.0 | 3.3 | 6.0 |
| Dynatup, 73°F, in-lb | 341 | 238 | 365 |

As demonstrated by the results set forth in the Table, Compositions 1 and 2, according to the present invention, and containing the high molecular weight polystyrene polymer exhibited significantly improved R* values, indicating that these compositions exhibit improved melt strength, as compared with Comparative Composition 3 which did not contain the high molecular weight polystyrene polymer. Moreover, Compositions 1 and 2 exhibited the increased R* values without a decrease in the heat distortion temperature. Compositions 1 and 2 according to the present invention also exhibited improved tensile strength and flexural modulus as compared with Comparative Composition 3. While Compositions 1 and 2 exhibited a decrease in impact strength, as compared with Comparative Composition 3, this loss in impact strength can be restored by addition of one or more impact modifiers to the blend compositions while maintaining the good melt strength properties of the compositions.

The preceding example is set forth to illustrate specific embodiments of the invention and is not intended to limit the scope of the compositions and methods of the present invention. Additional embodiments and advantages within the scope of the claimed invention will be apparent to one of ordinary skill in the art.

**Claims**

1. A polymer blend composition, comprising a polyphenylene ether resin, a rubber-modified polystyrene resin, and a high molecular weight polystyrene polymer having a weight average molecular weight, Mw, greater than about one million.

2. A polymer blend composition as defined by claim 1, wherein the high molecular weight polystyrene polymer is included in an amount sufficient to improve the melt strength of the composition.

3. A polymer blend composition as defined by claim 2, wherein the high molecular weight polystyrene polymer is included in an amount sufficient to improve the melt strength of the composition as indicated by an increase in the ratio of the shear rate viscosity at 1 $sec^{-1}$ to the shear rate viscosity at 100 $sec^{-1}$ at a predetermined processing temperature.

4. A polymer blend composition as defined by claim 1, wherein the high molecular weight polystyrene polymer is included in an amount of from about 1 to about 30 weight percent based on the polyphenylene ether resin, the rubber-modified polystyrene resin and the high molecular weight polystyrene polymer.

5. A polymer blend composition as defined by claim 4, wherein the blend composition comprises from about 5 to about 95 weight percent of the polyphenylene ether resin, from about 5 to about 95 weight percent of the rubber-modified polystyrene resin and from about 1 to about 30 weight percent of the high molecular weight polystyrene polymer.

6. A polymer blend composition as defined by claim 5, wherein the blend composition comprises from

about 40 to about 90 weight percent of the polyphenylene ether resin, from about 10 to about 50 weight percent of the rubber-modified polystyrene resin and from about 5 to about 30 weight percent of the high molecular weight polystyrene polymer.

**7.** A polymer blend composition as defined by claim 1, wherein the polyphenylene ether resin comprises poly(2,6-dimethyl-1,4-phenylene) ether.

**8.** A polymer blend composition as defined by claim 1, wherein the polyphenylene ether resin comprises poly(2,3,6-trimethyl-1,4-phenylene) ether.

**9.** A polymer blend composition as defined by claim 1, wherein the polyphenylene ether resin is a blend of or a copolymer which includes units of 2,6-dimethyl-1,4-phenylene ether and units of 2,3,6-trimethyl-1,4-phenylene ether.

**10.** A polymer blend composition as defined by claim 1, wherein the rubber-modified polystyrene resin comprises a styrenic component having a weight average molecular weight in the range of from about 25,000 to about 250,000.

**11.** A polymer blend composition as defined by claim 1, wherein the rubber-modified polystyrene resin has been formed by polymerizing a styrenic component in the presence of a rubber modifier.

**12.** A polymer blend composition as defined by claim 1, wherein the rubber-modified polystyrene resin has been formed by blending a rubber modifier with a prepolymerized styrenic component.

**13.** A polymer blend composition as defined by claim 1, wherein the high molecular weight polystyrene polymer comprises a polystyrene homopolymer.

**14.** A polymer blend composition as defined by claim 1, wherein the high molecular weight polystyrene polymer comprises a polystyrene copolymer formed from a styrene monomer and not greater than about 10 weight percent of an additional comonomer.

**15.** A blow molded product formed from a polymer blend composition comprising a polyphenylene ether resin, a rubber-modified polystyrene resin and a high molecular weight polystyrene polymer having a weight average molecular weight, Mw, greater than about one million.

**16.** A method for blow molding a shaped article, comprising the steps of melt extruding a blend of a polyphenylene ether resin, a rubber-modified polystyrene resin and a high molecular weight polystyrene polymer having a weight average molecular weight, Mw, greater than about one million and forming pellets from the melt extrudate, remelting the pellets, extruding the resulting melt through a ring die to form a parison, positioning the parison within a mold and blowing a gas stream into the parison positioned within the mold to form a shaped article.

**17.** A method for profile extrusion production of a shaped article, comprising the steps of melt extruding a blend of a polyphenylene ether resin, a rubber-modified polystyrene resin and a high molecular weight polystyrene resin having a weight average molecular weight, Mw, greater than about one million and forming a shaped article from the melt extrudate, and slowly cooling the shaped article to cause controlled shrinkage thereof.

**18.** A method for the production of a plastic sheet, comprising the steps of melt extruding a blend of a polyphenylene ether resin, a rubber-modified polystyrene resin and a high molecular weight polystyrene polymer having a weight average molecular weight, Mw, greater than about one million and forming a sheet from the melt extrudate.

**19.** A method for improving the melt strength of a polymer blend composition of a polyphenylene ether resin and a rubber-modified polystyrene resin, comprising blending therewith a melt strength improving amount of a high molecular weight polystyrene polymer having a weight average molecular weight, Mw, greater than about one million.